(19) **Europäisches Patentamt European Patent Office Office européen des brevets**

(11) **EP 1 335 652 B1**

(12) **EUROPEAN PATENT SPECIFICATION**

(45) Date of publication and mention of the grant of the patent:
**16.12.2009 Bulletin 2009/51**

(51) Int Cl.:
*A23L 1/275* [(2006.01)]     *A23P 1/04* [(2006.01)]
*A23D 7/00* [(2006.01)]     *A23L 1/302* [(2006.01)]

(21) Application number: **01997230.6**

(22) Date of filing: **22.10.2001**

(86) International application number:
**PCT/EP2001/012271**

(87) International publication number:
**WO 2002/041711 (30.05.2002 Gazette 2002/22)**

(54) **FOOD PRODUCT COMPRISING CAROTENOIDS**

CAROTINOIDHALTIGES NAHRUNGSMITTELPRODUKT

PRODUIT ALIMENTAIRE CONTENANT DES CAROTENOIDES

(84) Designated Contracting States:
**AT BE CH CY DE DK ES FI FR GB GR IE IT LI LU MC NL PT SE TR**

(30) Priority: **24.11.2000 EP 00310404**

(43) Date of publication of application:
**20.08.2003 Bulletin 2003/34**

(73) Proprietors:
- **Unilever N.V.**
  **3013 AL Rotterdam (NL)**
  Designated Contracting States:
  **AT BE CH DE DK ES FI FR GR IT LI LU MC NL PT SE TR**
- **Unilever PLC**
  **London**
  **EC4Y 0DY (GB)**
  Designated Contracting States:
  **CY GB IE**

(72) Inventors:
- **BODOR, Janos**
  **3133 AT Vlaardingen (NL)**
- **GUDE, Michael**
  **3133 AT Vlaardingen (NL)**
- **PELAN, Edward G.**
  **3133 AT Vlaardingen (NL)**
- **VISSER, Adrianus**
  **3133 AT Vlaardingen (NL)**

(74) Representative: **Wurfbain, Gilles L. et al**
**Unilever Patent Group**
**Olivier van Noortlaan 120**
**3133 AT Vlaardingen (NL)**

(56) References cited:
WO-A-00/13654    WO-A-97/04755
WO-A-97/47278    WO-A-99/48372
US-A- 5 952 007    US-A- 5 993 888
US-A- 6 013 303

- **CLAUSEN, E. E., AND NAKAYAMA, T. O. M.: "Carotenoid incorporation into soybean curd" JOURNAL OF FOOD SCIENCE., vol. 36, 1971, pages 632-634, XP000993033 INSTITUTE OF FOOD TECHNOLOGISTS. CHICAGO., US ISSN: 0022-1147**
- **PATENT ABSTRACTS OF JAPAN vol. 012, no. 338 (C-527), 12 September 1988 (1988-09-12) & JP 63 097668 A (LION CORP), 28 April 1988 (1988-04-28)**
- **UNTEN L. ET AL: "Antidiscolouring activity of green tea polyphenols on beta-carotene" JOURNAL OF AGRICULTURAL AND FOOD CHEMISTRY., vol. 45, 1997, pages 2009-2012, XP000655883 USAMERICAN CHEMICAL SOCIETY. WASHINGTON.**
- **DE MAN J.M. ET AL: "Stability of vitamin A beadlets in nonfat dry milk" MILCHWISSENSCHAFT., vol. 41, no. 8, 1986, pages 468-469, XP000568826 DEVV GMBH VOLKSWIRTSCHAFTLICHER VERLAG. MUNCHEN.**
- **DATABASE FSTA [Online] INTERNATIONAL FOOD INFORMATION SERVICE (IFIS), FRANKFURT-MAIN, DE; FOOD SCIENCE, CHINA (16) 3, 41-42 1996, MA J. ET AL: "embryo deformity caused by overdose of vitamin A fortified milk powder"**

**Description**

Field of the invention

The present invention relates to a fat-based food product, comprising a coloured compound, especially carotenoids and/or derivatives thereof.

Background of the invention

Carotenoids, in particular, beta-carotene, are well known and have been reported to protect cells from the reactive species (free radicals) that are suggested to play a role in immunity and cell-cell communication. It has also been reported to be an anti-ageing agent in human cells, and so slowing down the ageing process of the cells of humans.
Compounds belonging to the class of carotenoids are best known for their role as dietary antioxidants, although other potentially protective mechanisms for this group of compounds have been identified e.g. provitamin A activity. About 600 carotenoids occur in nature of which the six major ones in the diet are $\beta$- carotene, lycopene, lutein, $\beta$-cryptoxanthin, $\alpha$-carotene and zeaxanthin. Although no thorough scientific base for claiming a direct relation between cause and effect of the carotenoid intake and disease incidence has been proven thus far, inverse associations between carotenoid intake or status and disease incidence have been found.
Supplementation of food products with one of the most commonly known carotenoids, beta-carotene, is well known.
Beta-carotene is a well known source as it is the pro-vitamin of vitamin A. It is furthermore used as a colourant in food products, for example to colour drinks, soups, tomato products and margarine type of products. In such products, as a general indication, amounts around 5 mg/kg are used. Such an amount changes the colour of a white product to be light yellow.
US 5,993,888 discloses fat-like protein compositions for use in foods and cosmetics. It does not disclose a fat base food product comprising carotenoids.
WO 97/04755 discloses hard gelatine capsules with a reduced water transport of water vapour permeation through the hard gelatine capsule. It does not disclose a fat base food product comprising carotenoids.
Clausen and Nakayama in Journal of food science, (vol. 36, 1971 p 632-634) describe the addition of carotenoid pigments in the form of protein encapsulated beadlets, solution in vegetable oil and suspensions of microcrystals to soy milk prior to coagulation. The object was to explain the colour difference between the various soy milk samples. No fat base food product is disclosed.
De Man et al., Milchwissenschaft (vol. 14, no 8, 1986, p 468-469) disclose the use of vitamin A beadlets in non-fat dry milk. There is no disclosure of a fat based food product, comprising carotenoids in an amount of 15 mg/kg to 150 mg/kg .
Furthermore Ma et al in Database FSTA international food information service Food science, China (16) 3, 41-42 1996 describe a milk powder fortified with vitamin A. The document does not disclose of a fat based food product comprising encapsulated carotenoids in an amount of 15 mg/kg to 150 mg/kg.
US 5,952,007 dislcoses complex coarcevates of two or more biopolymer material. The complex coacervates may be used in foods and cosmetics. The level of carotene used in US 5,952,007 is about 3-7 mg/kg which is in the range of normal carotene levels for the products and is thus much lower than the lower level of 15 mg/kg.
WO 00/13654 discloses food compositions comprising carotenoids phytoene and phytofluene which are colourless. It does not disclose a fat base food product comprising coloured carotenoids.
WO 99/48372 discloses edible compositions containing encapsulated components. However the amount used of encapsulated components is at least 1 g/kg which is much more than 150 mg/kg.
US 6,013,303 dislcoses a squeezable spread composition with beta carothene. The level of carotene used however is in the range of 9 mg/kg, which is a normal carotene levels for the products and is thus much lower than the lower level of 15 mg/kg.
Unten et al in Journal of agricultural and food chemistry (vol 45, 1997, p 2009-2012) describe the use of non-encapsulated beta carotene in food products such as beverage and margarines for a discolouring effect of tea polyohenols. The use of encapsulated coloured carotenoids is not disclosed.
It will be appreciated that regular amounts may vary among different food product. Food products comprising around 5 mg/kg of carotenoids and no or few other coloured compounds are generally pale yellow of colour. The higher the carotenoid content, the more intense the colour is.
In particular in the Western world, consumers are reluctant to products of which the colour has changed from what they are used to. For example, margarine, butter, halvarin or salad oils, as well as mayonnaise, are considered unacceptable by consumers when the colour of such products is intense yellow, orange or even red. However, we have found that, at the same time, this type of products are excellent vehicles of the daily intake of amounts of carotenoids sufficient to obtain an elevated carotenoid status in human blood serum levels. Hence, a desire to add carotenoids to food products in amounts higher than needed for colouring, or in amounts above which any change in colour of the food product is still desirable or acceptable, is present.

In particular, there is a desire for food products that are fortified with coloured compounds like carotenoids and/or derivatives thereof, while the colour is comparable to the colour of regular products of the same composition, that are not fortified with these coloured compounds. Fortification is nowadays also desirable for food products which may lead to a reduction of the body carotenoids by their consumption, for example in food products which contain sucrose polyesters which are used as fat replacers, or contain materials like sterols and stanols, or esters thereof.

Fortification of food products with carotenoids or derivatives is known. For example EP-A-671,461 discloses the addition of significant amounts of carotenoids to oil. In WO-A-95/05747 the use of beta-carotene to reduce oxidation of fats and oils is disclosed. Compositions fortified with carotenoids are furthermore disclosed in EP-A-354,600.

Several attempts were made in the past to apply enhanced amounts of carotenoids to food products without significantly changing the colour of the food products.

US 5,532,009 discloses food products fortified with a water soluble carotenoid/cyclodextrin complex. It is disclosed that the carotenoid is encapsulated in cyclodextrin. Although it is reported that colour intensity and degradation are minimized, we have found that dextrin encapsulation can not sufficiently serve to reduce the yellow and/or red colour intensity of products comprising increased levels of carotenoids.

## Summary of the invention

It is an object of the invention to provide an edible composition which comprises a significant amount of carotenoids, i.e. an amount of carotenoids substantially higher than found these days in such products, but without a significant change of colour due to this increased amount of carotenoids, of these edible compositions. Another object of the invention is to provide an edible composition in which the carotenoids are bio-available. A further object of the invention is to provide an edible composition with carotenoids, having a high storage stability. One or more of the above objects are attained according to the invention.

Accordingly, the invention provides a fat-based food product, comprising at least 15 mg/kg and up to 150 mg/kg of one or more coloured carotenoids which are evenly distributed throughout the product, the product having a yellowness index in the range of 1 to 90 and a yellowness factor which is the yellowness index divided by the carotenoids level (expressed in g/kg) which is less than 4000, wherein the food product is selected from the group of shortenings, cooking fats, cheese, dressings, including mayonnaise, ice cream, milk type drinks, (drink) yoghurt, toppings and fillings, butter, margarine and low fat margarine and wherein the carotenoids are present in encapsulated form. Preferably the composition comprises at least 18 mg/kg of one or more coloured carotenoids.

Though higher levels than 150 mg/kg of carotenoids may be applied, it has been found that there is hardly any contribution to any of the benefits indicated of these amounts over such a level. of course, highest amounts applicable depend on the amount of food taken on a daily basis. For example, a single portion of a margarine varies in different countries. But differences in daily portions is even larger between the different food products in which the carotenoids may be applied.

The carotenoids are evenly distributed throughout the composition. Evenly distributed means that the encapsulates are evenly distributed throughout the product or emulsion. This means that, if part of the composition is consumed, the level of carotenoids in the part (whichever one this is, and whichever the size of the part) will be as indicated. Preferably, the carotenoids being evenly distributed also means that food products, in which a part, that may be consumed by a human, is found that has a significantly increased concentration of carotenoids, compared to other parts of the same food product, are not incorporated in this invention. An advantage with the compositions of this invention is that if only a small portion of the edible composition is consumed, still an increased level of carotenoids is eaten. Hence, in all embodiments of this invention, the carotenoids are homogeneously distributed throughout the composition. The distribution of the encapsulates is such that the number of encapsulates is roughly the same throughout each part of the edible composition.

The food products according to the invention can show the following benefit:

- the presence of an elevated amount of one or more compounds which have a strong colouring capacity, which compounds provide health benefits

- a colour comparable to that of similar products which do not contain such an elevated amount of one or more of these healthy compounds.

An edible composition has now been found that comprises increased levels of carotenoids.

In a preferred embodiment, products according to the present invention have a carotenoids level of at least 15 mg/kg, and preferably at least 18 mg/kg, and have a yellowness factor as defined in this specification, of less than 4000, and the yellowness index is in the range of 1 to 75. Preferably, compositions of the invention comprise at least 15 mg/kg carotenoids, more preferred at least 18 mg/kg carotenoids, and have a yellowness factor of less than 3333, more preferred of less than 2850, and a yellowness index which is in the range of 1 to 65.

In particular, preferred embodiments within the current invention compositions comprise at least 20 mg/kg, and have a yellowness factor of less than 2000, the yellowness index being in the range of 1 to 70.

Particular embodiments in which the edible composition or food products comprise more than 35 mg/kg carotenoids, and have a yellowness factor of less than 2000 and a yellowness index in the range of 1 to 70 can fulfill specific needs for food products which comprise significant amounts of carotenoids, without these food products having altered significantly compared to similar products not comprising these high amounts of carotenoids. This is even more the case for products comprising even more than 45 mg/kg with a yellowness factor of less than 2000 and a yellowness index of less than 90.

The invention further relates to particular food products fulfilling these criteria, methods for preparing such food products, and carotenoid comprising compositions for use in products so as to obtain products according to the specifications indicated above.

### Detailed description of the invention

Where weight percentages are indicated throughout this application, they are expressed as weight percentage (wt.%) on total product weight, unless indicated otherwise.

Edible compositions according to the invention comprise coloured compounds, said coloured compounds being carotenoids and/or derivatives thereof. Derivatives are for example chemically modified carotenoids that still show the desired anti-oxidant functionality.

The carotenoids according to the invention are those carotenoids that are coloured. Carotenoids that are essentially devoid of colour, for example phytoene and phytofluene, are not included in the carotenoids definition according to the invention. However such carotenoids, essentially devoid of colour, may be present in addition to the carotenoids according to the invention. Coloured carotenoid is herein defined as a carotenoid that shows absorbance, e.g. at least 10%, in its absorption or reflection spectrum in the range of 400-700 nm (visual range), preferably in the range 400-550 nm.

In this patent specification, where reference is made to carotenoids, both carotenoids and derivatives thereof are meant.

Preferred carotenoids are β- carotene, lycopene, lutein, β-cryptoxanthin, α-carotene and zeaxanthin.

The most preferred carotenoids are β- carotene, α-carotene, lutein and lycopene.

For all embodiments within the present invention, it is preferred that the edible composition is an edible emulsion, as with food emulsions, the problem of increasing colour upon increasing carotenoids level, and the undesirability thereof is largest. In many cases this type of product is in most cases desired as a white to pale yellowish product.

In a particular embodiment, the compositions comprise a carotenoid mixture of lutein, lycopene, and β- and α-carotene. The use of palm oil carotene is preferred over synthetically obtained carotene. In a further preferred embodiment, the edible composition comprises between 15-40 mg/kg carotenoids, of which about 2/3$^{rd}$ of the carotenoid is lutein, about 1/6$^{th}$ is lycopene, with the remaining part being a mixture of β- and α-carotene. The β- and α-carotene mixture in this preferred embodiment is preferably obtained from a natural source, of which palm-oil is a suitable example.

Said coloured carotenoids compounds and/or derivatives maybe present in capsules, hence being present in encapsulated form. In another embodiment, also free coloured compounds like carotenoids may be present in addition to the encapsulated carotenoids. However it is preferred to keep the free coloured compound content as low as possible.

Several methods have been found to obtain the edible compositions of the current invention and food products consisting of, or comprising such edible compositions.

Encapsulated form means said coloured compounds like carotenoids and/or derivatives thereof are at least partly, preferably fully retained in one or more capsules. The term encapsulated both refers to an embodiment wherein a thin coating (capsule wall) is formed around particles or drops comprising the encapsulated material (for example carotenoids), and to an embodiment wherein the particles or drops comprising the encapsulated material are trapped within or throughout a matrix.

The term "encapsulates" is also used to indicate encapsulated carotenoids.

Several methods for encapsulating carotenoids have been found which may be used for the preparation of the compositions according to the invention. Suitable encapsulation methods include encapsulation with a protein layer, encapsulation through the preparation of complex coacervates, preparation of duplexemulsions, and the like. It has been found that with these encapsulation methods, a further improvement may be obtained by the addition of minor amounts of titanium dioxide in the coating or matrix material of the particle. The amount of titaniumdioxide per particle depends on the size of the capsule and the amount of carotenoid which is to be enclosed in it. Suitably, 5-30 wt.% of titanium dioxide, and preferably 5-20 wt.% of titanium dioxide, based on the total weight of the particle is applied.

The encapsulated form may for example be embodied by encapsulation of the coloured compounds like carotenoids and/or derivatives thereof in crosslinked compounds, precipitated compounds or heat set compounds.

The products of the invention may be obtained by the addition of relatively large particles. Such particles are preferably, but not necessarily smaller than 300 $\mu$m (average size of the particles present). Preferably the average particle size is less than 150 $\mu$m, more preferably less than 50 $\mu$m.

The size of the capsules would depend on the desired (visual) effect. For instance, to obtain products which appear not to contain a carotenoid fortification, i.e. which contain increased amounts of carotenoids, without the consumer using the product clearly noticing a colour difference, suitably contain capsules which have a particle size of less than 50 $\mu$m, preferably less than 30 $\mu$m, most preferred from 1 to 20 $\mu$m. Preferably encapsulation of the coloured compounds like carotenoids and/or derivatives thereof is in compounds which are degradable in the human body. This results in a high bio-availability of the coloured compounds, e.g. carotenoids, present in the composition.

Carotenoids for use in edible compositions of the current invention may, for example, be encapsulated in proteins. Examples of suitable proteins are gelatin, caseins and whey proteins, although other edible proteins may also be suitable. Suitable encapsulation may for example be obtained by crosslinked proteins on a fat globule surface.

Optionally said crosslinking is obtained under application of an enzyme suitable as a catalyst for crosslinking of said protein or other compounds. Suitable enzymes are for example transglutaminases, peroxidases, laccases, tyrosinases or combinations thereof. The selection of enzyme is believed to be related to the protein or compound that is used as a substrate for crosslinking as some of the mentioned enzymes are known to be substrate specific. A preferred combination is transglutaminase with protein, with the proviso that whey protein if used is preferably in the denatured state.

In a preferred embodiment coloured compounds like carotenoids and/or derivatives thereof are encapsulated in a shell consisting essentially of heat set protein.

Preferably said encapsulates are protein coated fat globules, whereby carotenoids are dissolved in said fat. The thus formed encapsulates may be made visible by microscopy and protein staining. The presence of protein coated fat globules may also be demonstrated by a method wherein the edible composition comprising encapsulates is heated (for example to about 50 °C) and centrifuged. The protein content in the bottom layer is then determined. This is protein in solution. The protein in the creamed fat layer may also be determined. It will be appreciated that protein capsules or shells obtained by way of a combination of any of the above methods, such as heating in combination with transglutaminase treatment, are also encompassed. It has been found that even stronger and more stable particles are obtained if more than one layer of protein is applied as coating of the carotene encapsulates.

Another suitable way to obtain encapsulation is encapsulation in edible polymers other than protein, whereby dextrins are excluded. Examples of such polymers are gum arabic, starch and calcium alginate polymers.

Encapsulates may be in the form of coacervates.

For encapsulation, in most embodiments it is preferred to dissolve and/or disperse the carotenoid or carotenoid mixture in an oil or wax, which oil or wax is than added to an aqueous solution of polymer or polymer mixture (for complex coacervates) and treated so as to obtain the encapsulate. Setting of the polymer mixture so as to obtain particles may be provided for by reduction of temperature, by crosslinking by the use of an enzyme or chemical compound, or, for example, by adjusting the pH, e.g., to levels below 6, preferably to a level in the range between 4 and 5. The most suitable way will depend on the polymers used.

In view of their resistance to high shear conditions and storage stability, when applied in an emulsion, and capability of reduction of colour, preference is found for particles of complex coacervates. For the preparation of such complex coacervates, reference is made to EP 790780, though for the current invention, also carotenoids are present as indicated above.

It has been found that the use of such particles, for example of gelatin and Arabic gum, crosslinked by use of glutaraldehyde, provide very good, stable particles. By the addition of titaniumdioxide in the coacervation process the titaniumdioxide is included in the particles. These particles of carotenoids in complex coacervates also including 5-30 wt.%, preferably 5-20 wt.%, based on the particle weight, of titaniumdioxide, are preferred. Such particles are capable of obtaining a significant reduction of carotenoids colour in food products, preferably edible emulsions, when compared to non-encapsulated carotenoids in such products. The particles so obtained may be applied at levels of carotenoids up to 40 times as much as present with products known in the art without a significant change of colour, compared to products comprising these amounts of carotenoids without any treatment.

Also encompassed within the current invention are encapsulates comprising carotenoids in which the carotenoids are encapsulated in complex coacervates of at least two polymers, and the encapsulates comprise 5-30 wt.% on particle weight, of titaniumdioxide.

In yet another embodiment, an edible composition is prepared in which part of the carotenoids are present in encapsulated form and part are present in free form. In this embodiment, the level of free carotenoids may be adjusted so as to set the desired colour of the food product. For example, a product may be prepared in which lutein encapsulates, lycopene encapsulates, and free carotene are used. In a particular embodiment, such a food product may comprise 5-15 mg/kg of lutein, 1-8 mg/kg of lycopene, present as separate encapsulates or as encapsulates containing both, and 3-8 mg/kg of a mixture of alpha and beta-carotene in free form.

It is furthermore desired that the free carotenoids and/or encapsulates are evenly distributed throughout the edible composition. Such may suitably be obtained by adequate mixing. Though homogenization may be applied, for some encapsulates, such as protein encapsulates, this method is less preferred as high shear pressures could.lead to breaking of the particles and hence colouring of the product if done at high pressures. Edible compositions according to the invention are characterised by a maximum Yellowness Index whilst comprising a significant amount of carotenoids. When applying these high amounts of carotenoid to food products of the same composition, but without any technical measure, the colour of such 'untreated' food products will be significantly higher than the yellowness index of the products of the current invention. Without any treatment the Yellowness Index will be at least 10% higher.

Food products encompassed in the invention are preferred to be common products which are often used by consumers on a daily basis in amounts different for each individual. The invention is especially applicable for fat based food products. Fat based food products are food products (partially) based on fat and regarded by the consumer as "fatty type of products". Preferably the fat based product has a fat content of at least 10 wt.%, more prefarbly at least 20 wt.%, more preferably at least 25 wt%.

Such fat based food products may be for example water free food products such as shortenings or cooking fats. Said fat based food products may also be water comprising food products, which may be for example water continuous or fat continuous or bicontinuous. Examples of water continuous products are cheese, dressings, including mayonnaise, ice cream, milk type drinks, (drink) yoghurt, toppings and fillings, low fat margarine like 40% or 20% fat spreads.

Examples of fat continuous products are margarine and butter, low fat margarines comprising for example 40 or 25% fat, and the like. Suitable fat based products are for example liquid margarines, which are pourable or pumpable products comprising generally from 60 to 95 wt.% fat. Bicontinuous oil and water comprising products are for example disclosed in EP-A-463,688. These preferred products according to the invention may be of any consistency, for example pourable such as coffee creamer, pumpable such as certain liquid margarines, squeezable such as food pastes, spreadable such as margarine or margarine like table spreads, spoonable such as dairy creams, or wrapper type of products such as shortenings.

Fat based food products of high carotenoids comprised without change of colour are chosen from the group of shortenings, cooking fats, cheese, dressings, including mayonnaise, ice cream, milk type drinks, (drink) yoghurt, toppings and fillings, butter, margarine and low fat margarine. Products thereof used in the western world on a daily basis and so very suitable for daily intake of enhanced carotenoid levels are shortenings, cooking fats, butter, margarine and low fat margarine.

In such products, suitably 15-35 mg/kg, preferably 15-35 mg/kg carotenoids selected from the group consisting of lutein, lycopene, alpha and beta-carotene, or mixtures thereof, is present. In a specific embodiment, this type of product comprises 5-15 mg/kg of lutein, 1-8 mg/kg of lycopene, present as separate encapsulates or as encapsulates comprising at least both, and 3-8 mg/kg of a mixture of alpha and beta-carotene in free form.

In the current invention, the edible compositions, in particular the edible emulsions are not coloured strong yellow, pink, orange or red or a mixed-colour thereof despite the fact that they preferably comprise at least 15 mg/kg carotenoids, which would under circumstances disclosed in the prior art, wherein carotenoids are present in free form without any further treatment lead to intensely red, orange or yellow products.

It will be appreciated that the Yellowness Index depends on the product concerned.

If spreadable food products like margarine, cheese or products like yoghurt are desired, said products preferably show a pale yellowish colour, evidenced by a Yellowness Index of from 40 to 70 preferably from 45 to 65.

If products like off-white dressings or mayonnaise are desired, said products are preferably characterised by a Yellowness Index of from 10 to 40.

The current invention is in particular very suitable for food products comprising fat or a fat replacer such as table spreads or margarine or butter or margarine- or butter-like products. The terms fats and oils are used interchangeably in this document. Both by fat and oil is meant a triglyceride composition or a non-toxic material having properties comparable with those of triglycerides, which material may be indigestible.

Fat may be of any source such as dairy fat, vegetable fat, fish oil or a combination thereof. Preferred fats have a high content of polyunsaturated fatty acid residues as these fats are considered to have a beneficial effect on cholesterol levels in serum, in addition to the effect provided by sterols. Fat may for example be selected from the group comprising sunflower oil, safflower oil, palm oil, palm kernel oil, illippe oil, linseed oil, rapeseed oil, linola oil, soy bean oil, coconut oil or combinations thereof.

If a combination of fats is used, it is preferred that the resulting fat blend comprises at least 30 wt.% on total fat blend, more preferred at least 45 wt.% of polyunsaturated fatty acids.

Preferred products comprise at least 5 wt.% fat, more preferred from 5 to 80 wt.% fat which is a common amount for products such as margarine. According to a preferred embodiment the edible composition according to the invention comprises from 0.1 to 25 wt.% protein, preferably from 2 to 15 wt.%, more preferred from 2 to 5 wt.% protein.

In a recommendable embodiment of the invention, the food products within the scope of the invention are storage stable. This implies that among others, products according to the invention preferably do not show increased colouring of the food products in the course of storage as a result of breaking of encapsulates.

For products according to the invention, the desired storage time depends on regular use. Such a food product needs to be storage stable for a time sufficient for transportation to for example a super market, and in addition thereto for a certain time after the product has been bought by a consumer.

Preferred products are storage stable for at least 4 weeks, preferably at least 10 weeks, more preferred around 4 to 9 months. This storage stability implies that preferred products show, throughout the product, when compared to a product obtained directly after production, an increase in Yellowness Index, of less than 10% after 4 weeks, preferably at most 20% after 10 weeks, whereby the product obtained directly after production is the reference product.

In addition to the above-mentioned ingredients, food products according to the invention may optionally comprise further ingredients suitable for use in these products. Examples of these materials are sugar or other sweetener materials, EDTA, spices, salt, bulking agents, egg yolk, emulsifiers, stabilising agents, flavouring materials, colouring materials, acids, preserving agents, vegetable particles etc.

Food products according to the invention may also comprise protein. Such protein may for example serve to improve structure or flavour characteristics. Said protein may be derived from any source, for example dairy protein.

Examples of suitable methods to produce fat continuous products like high fat margarine or water continuous products such as cheese are described at a later stage.

The edible compositions comprising encapsulated coloured compounds like carotenoids and/or derivatives thereof, may be added to a food product or to ingredients suitable to prepare a food product in any known way, or may be a food product in itself.

In order to obtain a food product of optimal quality, it is advisable that the carotenoid comprising edible composition is homogeneously mixed with edible material or at least with one ingredient of the edible material that forms a food product. A homogeneous distribution is believed to avoid that certain parts of the food products contain high levels of carotenoid, whereas other parts of the food products contain low levels of carotenoids. This may result in a very variable daily intake of these healthy compounds.

Said coloured compound comprising edible composition may for example be added to the aqueous phase before mixing with the fatty phase (if present) or may be added to the final product under stirring to ensure homogeneous distribution of the carotenoid composition in the final product.

The edible composition may be included in a food product whereby said edible composition is for example in the form of an emulsion or in the form of a powder.

Especially if a process is used wherein high shear regimes are applied, the coloured compound comprising edible composition is preferably added just before packaging.

The amount of encapsulated coloured compound comprising edible composition that is added to the final food product is such that the amount of coloured compound on total weight is at least 15 mg/kg on total product. It is believed to be within the capabilities of the skilled person to calculate the amount of encapsulated composition to be added, starting from the initial amount of coloured compound like carotenoid that is present in said encapsulated composition.

According to another embodiment the obtained coloured compound comprising edible composition is used for the preparation of a fat continuous product such as a margarine or margarine like products for example comprising from 5 to 80 wt.% fat. A preferred process to prepare such a margarine (like) product comprises the steps of emulsification of aqueous phase in a melted fatty phase, mixing the formed emulsion to ensure uniformity, cooling said emulsion in a shear unit, for example a tubular swept surface heat exchanger, to obtain crystallisation, working the resulting partially crystallised emulsion in for example a pin stirrer unit and packaging the resulting fat continuous product. The encapsulated coloured composition is preferably added just before packaging. Optionally before packaging the emulsion is subjected to a resting treatment to increase the final product consistency. Said resting is for example carried out in a resting unit or a quiescent tube. Optionally the aqueous phase is pasteurised before mixing it with a fatty phase.

In the preparation of water free products like shortenings, the encapsulated coloured compound comprising edible composition is preferably added in dried, powdered form.

A preferred process to prepare a pumpable oleaginous food product comprises the steps of melting triglyceride fat in a shear mixer such as an A unit, cooling to below the alpha crystallisation temperature and subsequent, or prior to cooling, mixing the triglyceride fat with the above indicated aqueous phase. The resulting product is preferably stored at a temperature from 0 to 25 °C, and preferably between 0 and 15°C.

Water continuous cheese products like fresh cheese are for example obtained by a process comprising the steps of preparing a cream composition comprising an oil in water emulsion, subjecting this composition to acidification, concentrating the composition under whey removal, applying a homogenising treatment to the obtained concentrate to obtain the final product.

A water continuous spreadable product may for example be prepared by the method indicated above for fresh cheese, whereby optionally the whey removal and concentration step are left out.

The edible composition comprising encapsulated coloured compounds like carotenoids may be added at any stage during processing.

A bicontinuous product may suitably be prepared by a process comprising the steps of forming an oil and water comprising mixture, homogenising the oil and water mixture under such conditions that an oil in water dispersion is obtained with fat droplets having a preferred volume weighted mean diameter of less than 5 micrometer, cooling the dispersion under conditions such that coalescence of the oil droplets is induced. Cooling may be effected by passing the emulsion through for instance a cooling coil, or a scraped surface heat exchanger.

The encapsulated coloured compound comprising edible composition may be added at any stage during processing, preferably after homogenisation.

Dressings comprising for example from 0 to 60 wt.% fat may suitably be prepared by preparation of an aqueous phase comprising for example flavour components, preservatives, thickeners and emulsifiers. A fatty phase comprising a fat such as sunflower oil, or a fat replacer, enriched with sterol compositions may be added to the aqueous phase under stirring. The obtained mixture is preferably thoroughly mixed to obtain a pre-emulsion and then processed in a low shear device such as a colloid mill. A water continuous gel dispersion then results. The edible composition comprising encapsulated coloured compounds is preferably added after the colloid mill treatment. The invention is now illustrated by the following examples.

## Examples

### Determination of yellowness index and yellowness factor

The yellowness index (YI) is determined from samples at 15 °C, on a Tricolor LFM3 Colorimeter (Dr. Bruno Lange mbH, Dusseldorf, Germany). The Yellowness Index is calculated from the tristimulus colour (in X, Y and Z) of the sample, referred to the standard illuminant C (white plate) and the 2 °C observer according to the formula:

$$YI = \frac{1.28 \times X - 1.06 \times Z}{Y} \times 100 \qquad (1)$$

The sample is introduced into a powder cuvette, available from Dr. Bruno Lange GmbH, Dusseldorf, Germany. The powder cuvette is filled with the composition for three quarters, in such a way that the bottom of the cuvette is completely and uniformly covered with the composition (without enclosed air bubbles).

The yellowness factor (YF) is the yellowness index (YI), divided by the carotenoids level expressed in g/kg.

### Example A

*Spreads containing 70 wt.% of fat were prepared as follows:*

In this example, amounts indicated are based on the final product.

A fat phase was prepared of ingredients:

63% sunflower oil

7% of an interesterified fat composition of 65 parts of a fractionated palm oil stearine and 35 parts of palm kernel oil

0.04% lecithin

0.08% emulsifier Hymono 8903[tm]
carotene (amount as indicated per example)
TiO2 (amount as indicated per example)

Ingredients of the aqueous phase

1.75% NaCl
1% sweet whey
0.04% lactic acid
0.1% K-sorbate
water (balance amount)
pH was set around 5.0

The fat phase and aqueous phase were mixed to a pre-mix, and passed through an A-A-C processing line under the conditions as follows

The premix was heated to about 60 °C, and passed through the processing line for which the following conditions were applied:

A unit: 800 rpm, at 20 °C,
A unit: 800 rpm, at 8 °C
C unit: 200 rpm
The throughput was 4.5 kg/hr

*Preparation of carotenoid encapsulates of protein*

Carotenoid encapsulates were prepared as follows:

A 2.5% Na-caseinate solution was prepared by adding 37.5 g of Na-caseinate, 1461 g of demineralized water, and 1.5 g of potassium sorbate, and stirring for one hour.

To 1440 g of the so obtained solution, 160 g of a mixture of sunflower oil and β-carotene (4.8 g β-carotene, 155.2 g sunflower oil) was added and mixed, so that a turbid, dark red coloured mixture was obtained. The mixture was subsequently treated first by an Ultra Turrax$^{tm}$ and then by a high pressure homogenisator (pressure of 150 bar) to form an emulsion.

To the emulsion 0.75% D-gluconic acid lactone was added to lower the pH. The mixture was stirred in a vessel at 400 rpm for 45 minutes, and at 1800 rpm for another 45 minutes.

To the obtained mixture, 7.83 transglutaminase was added (1% enzyme), the mixture was stirred at 400 rpm for 17.5 hours. Subsequent centrifuging, filtering, washing, and repeating this, resulted in encapsulates containing 3010 mg/kg β-carotene. The encapsulates obtained are referred to as type "A".

*Preparation of carotenoid encapsulates of protein containing TiO$_2$.*

The procedure of the preparation of carotenoid encapsulates of protein is repeated, the only alternative to the procedure being that after addition and mixing of the sunflower oil and carotenoids to the solution, 36 grams of TiO$_2$ were added. The Ultra Turrax and homogenisator treatment were carried out as described above. As a result, encapsulates containing 8% TiO$_2$ and 3214 mg/kg of β-carotene were obtained.

The encapsulates obtained are referred to as encapsulates type "B".

*Preparation of complex coacervates*

Carotenoid encapsulates were prepared as follows:

600 grams of a gelatin solution (concentration 2%, temperature about 60 °C) were added to 60 grams of a sunflower oil containing β-carotene (at 60 °C), and the mixture was stirred in an Ultra Turrax™. The amount of β-carotene was set so as to obtain a concentration of 1% in the sunflower oil. To the mixture, 600 grams of a 2 wt.% aqueous solution of Arabic Gum were added, the temperature was kept at 60 °C. After the addition of the Arabic Gum solution, an 28 grams of TiO$_2$ were added under stirring. The pH was set at 4.3, using HCl (4 N), while the stirring was continued. The obtained mixture was allowed to cool to 20 °C under slow stirring, and subsequently cooled to about 4 °C.

The obtained encapsulates (coacervates) containing composition was filtered, and the encapsulates were obtained. To the encapsulates, water was added, the temperature of the composition was raised to 50 °C, filtered again and the encapsulates where then washed with water.

To the coacervates, about 500 ml of water was added. Under slow stirring, 4.5 ml glutaraldehyde was added. Stirring was continued for about 19 hours.

By filtration and washing, 151 g of encapsulates was obtained. The β-carotene was present in an amount of about 1% of the total weight of the particles. TiO$_2$ was present in an amount of about 30% based on total particle weight.

The encapsulates obtained are referred to as encapsulates type "C".

*Preparation of complex coacervates containing TiO$_2$*

The procedure of preparation of encapsulated type "C" was repeated, with the proviso that the amount of TiO$_2$ was 9.33 grams.

The encapsulates obtained are referred to as encapsulates type "D".

**Bio-degradibility of complex coacervates "C" and "D"**

The bio-degradibility of the complex coacervates "C" and "D" was measured using the enzyme mixture Pancreatin USP XXIII, in a test to simulate human intestinal conditions. The enzyme mixture Pancreatin is comparable to the enzyme mixture in the human gastrointestinal tract, and is recommended by US Pharmocopeia (USP) for dissolution tests. Pancreatin USP XXIII was supplied by Sigma , Netherlands, product no. P8096, CAS no. 8049-47-6.

7 grams of encapsulates were mixed with 1 litre of a 0.79 wt.% solution of Pancreatin USP XXIII in water (at pH 7 and 37°C), and the breakdown of the the encapsulates was followed. The test resulted in a complete dissolution of the coacervates "C" and "D" within 60 minutes.

The results of the above bio-degradability test indicate that the crosslinked coacervates according to the invention are most likely bio-degradable by humans and that therefore the carotenoids in the crosslinked coacervates according to the invention have a high bio-availability.

***Comparative Examples I-V***

Spreads were prepared following the procedure as described above. Carotene was present in the in free form, i.e. not encapsulated, in amounts as indicated. Comparative example I corresponds to a commercial 70wt.% fat spread with beta-carotene colouring. No TiO$_2$ was used. The carotenoids level on total spread was measured after the spread was prepared, and is indicated in Table I.

**TABLE I**

| Ex. | β-carotene (mg/kg) | TiO$_2$ | Yellowness Index | Yellowness Factor (g/kg) |
|-----|--------------------|---------|------------------|--------------------------|
| I | 5 | none | 50 | 10000 |
| II | 22.4 | none | 92 | 4098 |
| III | 56.5 | none | 111 | 1965 |
| IV | 104.7 | none | 125 | 1194 |
| V | 153.5 | none | 134 | 873 |

**Example VI-VIII**

Spreads were prepared as described in the above procedure. This time, to the fat phase of the spreads, encapsulates of type "A" were added in an amount as indicated in Table II. No TiO$_2$ was used.

**TABLE II**

| Ex. | β-carotene (mg/kg) | TiO$_2$ | Yellowness Index | Yellowness Factor (g/kg) |
|------|--------------------|---------|------------------|--------------------------|
| VI | 17.6 | none | 59 | 3352 |
| VII | 35.1 | none | 68 | 1937 |
| VIII | 103.1 | none | 88 | 853 |

It was observed that with these particles, it is preferred to add these after having passed the spread through the Votator processing line, under gentle stirring.

**Example IX to X**

Spreads were prepared as described in the above procedure. This time, to the fat phase of the spreads, encapsulates of type "B" were added in an amount resulting in spreads containing an amount of the carotene as indicated in Table III.

**TABLE III**

| Ex. | β-carotene (mg/kg) | TiO$_2$ Present | Yellowness Index | Yellowness Factor (g/kg) |
| --- | --- | --- | --- | --- |
| IX | 25.4 | yes | 70 | 2756 |
| X | 62.8 | Yes | 90 | 1433 |

**Example XI-XIII**

Spreads were prepared as described in the above procedure. This time, to the fat phase of the spreads, encapsulates of type "C" were added in an amount in an amount resulting in spreads containing an amount of the carotene as indicated in Table IV.

**TABLE IV**

| Ex. | β-carotene (mg/kg) | TiO$_2$ Present | Yellowness Index | Yellowness Factor (g/kg) |
| --- | --- | --- | --- | --- |
| XI | 37.4 | Yes | 69.5 | 1858 |
| XII | 66 | Yes | 83 | 1257 |
| XIII | 48 | Yes | 87 | 1813 |

**Example XIV-XVII**

Spreads were prepared as described in the above procedure. This time, to the fat phase of the spreads, encapsulates of type "D" were added in an amount resulting in spreads containing an amount of the carotene as indicated in Table V.

**TABLE V**

| Ex. | β-carotene (mg/kg) | TiO$_2$ | Yellowness Index | Yellowness Factor (g/kg) |
| --- | --- | --- | --- | --- |
| XIV | 15.0 | Yes | 31.34 | 2089 |
| XV | 44.3 | Yes | 43.96 | 998 |
| XVI | 95.1 | Yes | 50.13 | 527 |
| XVII | 158 | Yes | 60.61 | 384 |

**Determination of the spreadability of spreads**

The spreadability of the spreads was determined by spreading it on grease-free paper using a knife, and assessment whether the emulsion is stable after spreading. The result is compared with five standards on photograph. These standards vary from very stable emulsion (1) to complete separation of emulsion (5). All spreads according to examples. I XIII were very stable emulsions.

**Claims**

1. Fat-based food product comprising at least 15 mg/kg and up to 150 mg/kg of one or more coloured carotenoids which are evenly distributed throughout the product, the product having a yellowness index in the range of 1 to 90 and a yellowness factor which is the yellowness index divided by the carotenoids level (expressed in g/kg) which is less than 4000, wherein the food product is selected from the group of shortenings, cooking fats, cheese, dressings, including mayonnaise, ice cream, milk type drinks, (drink) yoghurt, toppings and fillings, butter, margarine and low fat margarine and wherein the carotenoids are present in encapsulated form.

2. Fat-based food product according to claim 1, wherein the food product is selected from the group of shortenings, cooking fats, butter, margarine and low fat margarine.

3. Fat-based food product according to claim 1 or 2 comprising at least 10 wt.% fat.

4. Fat-based food product according to any of claims 1-3, wherein the product comprises at least 18 mg/kg carotenoids.

5. Fat-based food product according to any of claims 1-4, wherein the product has yellowness index in the range of 1 to 75.

6. Fat-based food product according to claim 5, wherein the product has a yellowness factor of less than 3333, preferably of less than 2850, and a yellowness index in the range of 1 to 65.

7. Fat-based food product according to claim 5, wherein at least 20 mg/kg carotenoids are present, and wherein the product has a yellowness factor of less than 2850, and a yellowness index in the range of 1-70.

8. Fat based food product according to claim 1, wherein at least 45 mg/kg carotenoids are present, and wherein the product has a yellowness factor of less than 2000, and a yellowness index in the range of 1-90.

9. Fat-based food product according to any of the preceding claims, wherein the product is an edible emulsion.

10. Fat-based food product according to claim 1, wherein the carotenoids encapsulates are complex coacervates.

11. Fat-based food product according to claim 10, wherein the complex coacervates comprise gelatin and Arabic gum.

12. Fat based food product according to claim 1, wherein the encapsulates have a coating of at least one protein layer.

13. Fat based food product according to any of claims 1 to 12, wherein the encapsulate comprises at least 5-30 wt.% $TiO_2$, based on the weight of the total encapsulate particle.

14. Fat based food product according to claim 1, wherein the food product comprises 15-25 mg/kg carotenoids selected from the group consisting of lutein, lycopene, alpha and beta-carotene, or mixtures thereof.

15. Fat based food product according to claim 14 wherein the food product comprises 5-15 mg/kg of lutein, 1-8 mg/kg of lycopene, present as separate encapsulates or as encapsulates comprising both, and 3-8 mg/kg of a mixture of alpha and beta-carotene in free form.

**Patentansprüche**

1. Nahrungsmittelprodukt auf Fettbasis, das wenigstens 15 mg/kg und bis zu 150 mg/kg eines gefärbten Carotinoids oder mehrerer gefärbter Carotinoide, das/die gleichmäßig durch das Produkt verteilt ist/sind, umfasst, wobei das Produkt einen Yellowness-Index im Bereich von 1 bis 90 und einen Yellowness-Faktor hat, welcher der Yellowness-Index dividiert durch die Carotinoid-Konzentration (ausgedrückt in g/kg) ist, der kleiner als 400 ist, wobei das Nahrungsmittelprodukt aus der Gruppe bestehend aus Backfetten, Kochfetten, Käse, Dressings, einschließlich Mayonnaise, Eiscreme, Getränke des Milchtyps, (Trink-)Yoghurt, Überzügen und Füllungen, Butter, Margarine und fettarmer Margarine, ausgewählt ist und wobei die Carotinoide in eingekapselter Form vorliegen.

2. Nahrungsmittelprodukt auf Fettbasis gemäß Anspruch 1, wobei das Nahrungsmittelprodukt aus der Gruppe aus Backfetten, Kochfetten, Butter, Margarine und fettarmer Margarine ausgewählt ist.

3. Nahrungsmittelprodukt auf Fettbasis gemäß Anspruch 1 oder 2, das wenigstens 10 Gewichts-% Fett umfasst.

4. Nahrungsmittelprodukt auf Fettbasis gemäß einem der Ansprüche 1 bis 3, wobei das Produkt wenigstens 18 mg/kg Carotinoide umfasst.

5. Nahrungsmittelprodukt auf Fettbasis gemäß einem der Ansprüche 1 bis 4, wobei das Produkt einen Yellowness-Index im Bereich von 1 bis 75 hat.

6. Nahrungsmittelprodukt auf Fettbasis gemäß Anspruch 5, wobei das Produkt einen Yellowness-Faktor von kleiner als 3333, vorzugsweise von kleiner als 2850, und einen Yellowness-Index im Bereich von 1 bis 65 hat.

**7.** Nahrungsmittelprodukt auf Fettbasis gemäß Anspruch 5, wobei wenigstens 20 mg/kg Carotinoide vorliegen und wobei das Produkt einen Yellowness-Faktor von kleiner als 2850 und einen Yellowness-Index im Bereich von 1-70 hat.

**8.** Nahrungsmittelprodukt auf Fettbasis gemäß Anspruch 1, wobei wenigstens 45 mg/kg Carotinoide vorliegen und wobei das Produkt einen Yellowness-Faktor von kleiner als 2000 und einen Yellowness-Index im Bereich von 1-90 hat.

**9.** Nahrungsmittelprodukt auf Fettbasis gemäß einem der vorangehenden Ansprüche, wobei das Produkt eine essbare Emulsion ist.

**10.** Nahrungsmittelprodukt auf Fettbasis gemäß Anspruch 1, wobei die Carotinoid-Einkapselungen komplexe Koazervate sind.

**11.** Nahrungsmittelprodukt auf Fettbasis gemäß Anspruch 10, wobei die komplexen Koazervate Gelatine und Gummi arabicum umfassen.

**12.** Nahrungsmittelprodukt auf Fettbasis gemäß Anspruch 1, wobei die Einkapselungen eine Beschichtung aus wenigstens einer Proteinschicht haben.

**13.** Nahrungsmittelprodukt auf Fettbasis gemäß einem der Ansprüche 1 bis 12, wobei die Einkapselung wenigstens 5-30 Gewichts-% $TiO_2$, bezogen auf das Gewicht des gesamten eingekapselten Partikels, umfasst.

**14.** Nahrungsmittelprodukt gemäß Anspruch 1, wobei das Nahrungsmittelprodukt 15-25 mg/kg Carotinoide, ausgewählt aus der Gruppe, bestehend aus Lutein, Lycopin, alpha- und beta-Carotin und Gemischen davon, umfasst.

**15.** Nahrungsmittelprodukt auf Fettbasis gemäß Anspruch 4, wobei das Nahrungsmittelprodukt 5-15 mg/kg Lutein, 1-8 mg/kg Lycopin, vorliegend als getrennte Einkapselungen oder als Einkapselungen, die beides enthalten, und 3-8 mg/kg eines Gemisches aus alpha- und beta-Carotin in freier Form umfasst.

**Revendications**

**1.** Produit alimentaire à base de matière grasse comprenant au moins 15 mg/kg et jusqu'à 150 mg/kg d'un ou plusieurs caroténoïdes colorés qui sont répartis uniformément dans le produit, le produit possédant un indice de jaunissement sur la plage de 1 à 90 et un facteur de jaunissement, qui est égal à l'indice de jaunissement divisé par la teneur en caroténoïdes (exprimée en g/kg) inférieur à 4000, dans lequel le produit alimentaire est choisi dans le groupe des matières grasses pour pâtisserie, des matières grasses pour la cuisson, des fromages, des sauces pour salade, notamment de la mayonnaise, des crèmes glacées, des boissons lactées, des yaourts (à boire), des garnitures et des farces, du beurre, de la margarine et de la margarine à faible teneur en matière grasse, et dans lequel les caroténoïdes sont présents sous une forme encapsulée.

**2.** Produit alimentaire à base de matière grasse selon la revendication 1, dans lequel le produit alimentaire est choisi dans le groupe des matières grasses pour pâtisserie, des matières grasses pour la cuisson, du beurre, de la margarine et de la margarine à faible teneur en matière grasse.

**3.** Produit alimentaire à base de matière grasse selon la revendication 1 ou 2, comprenant au moins 10% en poids de matière grasse.

**4.** Produit alimentaire à base de matière grasse selon l'une quelconque des revendications 1-3, dans lequel le produit comprend au moins 18 mg/kg de caroténoïdes.

**5.** Produit alimentaire à base de matière grasse selon l'une quelconque des revendications 1-4, dans lequel le produit possède un indice de jaunissement sur la plage de 1 à 75.

**6.** Produit alimentaire à base de matière grasse selon la revendication 5, dans lequel le produit possède un facteur de jaunissement inférieur à 3333, de préférence inférieur à 2850, et un indice de jaunissement sur la plage de 1 à 65.

**7.** Produit alimentaire à base de matière grasse selon la revendication 5, dans lequel au moins 20 mg/kg de caroténoïdes sont présents, et dans lequel le produit possède un facteur de jaunissement inférieur à 2850, et un indice de jaunissement sur la plage de 1 à 70.

**8.** Produit alimentaire à base de matière grasse selon la revendication 1, dans lequel au moins 45 mg/kg de caroténoïdes sont présents, et dans lequel le produit possède un facteur de jaunissement inférieur à 2000, et un indice de jaunissement sur la plage de 1 à 90.

**9.** Produit alimentaire à base de matière grasse selon l'une quelconque des revendications précédentes, dans lequel le produit est une émulsion comestible.

**10.** Produit alimentaire à base de matière grasse selon la revendication 1, dans lequel les produits d'encapsulation de caroténoïdes sont des coacervats complexes.

**11.** Produit alimentaire à base de matière grasse selon la revendication 10, dans lequel les coacervats complexes comprennent de la gélatine et de la gomme arabique.

**12.** Produit alimentaire à base de matière grasse selon la revendication 1, dans lequel les produits d'encapsulation portent un enrobage d'au moins une couche de protéines.

**13.** Produit alimentaire à base de matière grasse selon l'une quelconque des revendications 1 à 12, dans lequel le produit d'encapsulation comprend au moins 5-30% en poids de $TiO_2$, par rapport au poids de la particule de produit d'encapsulation dans son ensemble.

**14.** Produit alimentaire à base de matière grasse selon la revendication 1, dans lequel le produit alimentaire comprend 15-25 mg/kg de caroténoïdes choisis dans le groupe constitué par la lutéine, le lycopène, le carotène alpha et bêta, ou des mélanges de ceux-ci.

**15.** Produit alimentaire à base de matière grasse selon la revendication 14, dans lequel le produit alimentaire comprend 5-15 mg/kg de lutéine, 1-8 mg/kg de lycopène, présents sous forme de produits d'encapsulation séparés ou sous forme de produits d'encapsulation comprenant les deux, et 3-8 mg/kg d'un mélange de carotène alpha et bêta sous forme libre.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 5993888 A
- WO 9704755 A
- US 5952007 A
- WO 0013654 A
- WO 9948372 A
- US 6013303 A
- EP 671461 A
- WO 9505747 A
- EP 354600 A
- US 5532009 A
- EP 790780 A
- EP 463688 A


**Non-patent literature cited in the description**

- **Clausen ; Nakayama.** *Journal of food science,* 1971, vol. 36, 632-634
- **De Man et al.** *Milchwissenschaft,* 1986, vol. 14 (8), 468-469
- **Ma et al.** *Database FSTA international food information service Food science, China,* 1996, vol. 3 (16), 41-42
- **Unten et al.** *Journal of agricultural and food chemistry,* 1997, vol. 45, 2009-2012